# EUROPÄISCHE PATENTSCHRIFT

(11) **EP 0 498 759 B1**
(45) Veröffentlichungstag und Bekanntmachung des Hinweises auf die Patenterteilung: **10.05.1995**
(21) Anmeldenummer: 92810015.5
(22) Anmeldetag: 09.01.1992
(51) Int. Cl.: G01D 3/00

(54) **Messanordnung zur gleichzeitigen Messung eines elektrischen Signals und eines überlagerten Teilsignals**
Measuring device for indicating simultaneously an electric signal and a superimposed partial signal
Dispositif de mesure pour indiquer simultanément un signal électrique et un signal partiel superpositionné

(30) Priorität: 07.02.1991 CH 374/91
(43) Veröffentlichungstag der Anmeldung: 12.08.1992
(73) Patentinhaber: K.K. HOLDING AG, CH-8408 Winterthur (CH)
(72) Erfinder: Giorgetta, Mario, CH-8408 Winterthur (CH)

(56) Entgegenhaltungen:
- EP-A- 0 126 021
- PATENT ABSTRACTS OF JAPAN vol. 013, no. 474 (E-836) 26. Oktober 1989 & JP-A-01186005
- "Sensoren in der Praxis: Daten, Applikationen, Bezugsquellen", H. Lemme, Franzis-Verlag, München 1990, Seiten 113-116

## Beschreibung

Die Erfindung betrifft eine Messanordnung zum Erfassen von Kräften, Dehnungen, Drücken und Beschleunigungen, bestehend aus einem entsprechenden Aufnehmer und damit elektrisch verbundenen Messverstärkern, wobei dem Aufnehmer ein erster Messverstärker und, mit kapazitiver Kopplung, ein zweiter Messverstärker mit je einem eigenen Signalausgang nachgeschaltet sind.

Aus der EP-B-0 126 021 ist eine Schaltungsanordnung der vorstehend geschilderten Art bekannt; diese bekannte Schaltung dient dazu, das Ausgangssignal des ersten Messverstärkers, das die Messwerte für zwei verschiedene physikalische Grössen, beispielsweise für die Temperatur und für eine Kraft enthält, durch Aufteilung in ein Gleichspannungs-Signal für die Temperatur und ein Wechsel-Spannungs-Signal für sich ändernde Kräfte so aufzulösen, dass der Messwert für jede der beiden Grössen separat bestimmt werden kann.

Aus Literatur und Patentliteratur sind weiterhin Verstärkerschaltungen bekannt, welche elektrische Messsignale verstärken, die einem Aufnehmer für mechanische Messgrössen wie Kräften, Dehnungen, Drücken und Beschleunigungen entstammen. Im allgemeinen erfolgt die elektrische Verstärkung durch einen dem Messzweck angepassten Messverstärker, dessen Verstärkungsgrad zwecks Einstellung der gewünschten Messempfindlichkeit reguliert werden kann. Erfolgt z.B. eine Kraftmessung, wie beispielsweise dem Buch von H. Lemme "Sensoren in der Praxis: Daten, Applikationen, Bezugsquellen", Franzis Verlag, München 1990, Seite 113-116, zu entnehmen ist, durch einen piezoelektrischen Messwertaufnehmer, so wird das elektrische Ausgangssignal durch einen Ladungsverstärker aufgenommen, wie er beispielsweise im Buch "Piezoelektrische Messtechnik" von J. Tichy und G. Gautschi, erschienen im Springer-Verlag, auf den Seiten 218ff beschrieben wird. Das verstärkte elektrische Ausgangssignal, das beispielsweise proportional zu einer am Eingang des Aufnehmers auftretenden Kraft ist, kann dann auf einem Registriergerät als Messkurve dargestellt werden. Im zeitlichen Verlaufe dieser, einen Gesamtvorgang repräsentierenden Signalkurve, können unter Umständen überlagerte Schwankungssignale auftreten, deren Details wegen mangelnder Auflösung und Vergrösserung nicht genau erfasst werden können.

Es ist die Aufgabe der vorliegenden Erfindung, eine Verstärkerschaltung zu schaffen, welche den genannten Nachteil mangelnder Auflösung und Vergrösserung behebt. Die Aufgabe wird dadurch gelöst, dass als zweiter Verstärker ein Ladungsverstärker mit Gegenkopplungskapazität und ein Spannungsverstärker in Serie vorhanden sind, und dass ferner dem Ladungsverstärker parallel ein Kurzschluss-Schalter zugeordnet ist, der im Verwendungsfall in Zeiten kleiner Variationen des Signals am ersten Signalausgang geöffnet und in Zeiten grosser Variationen des Signals am ersten Signalausgang geschlossen ist, wodurch - während der Oeffnungszeiten des Schalters - simultan am ersten Signalausgang das gesamte Mess-Signal und am zweiten Signalausgang Aenderungen dieses Mess-Signals mit vergrösserter Verstärkung gemessen werden.

Die Wirkungsweise der Erfindung soll im folgenden anhand der Zeichnung und einem im einzelnen dargestellten Anwendungsfall beschrieben werden.

Es zeigen:
- Fig. 1: die erfindungsgemässe Grundschaltung (Anspruch 1)
- Fig. 2: eine modifizierte Grundschaltung, bei der der erste Verstärker aus einem Ladungsverstärker mit nachgeschaltetem Spannungsverstärker zur Einstellung der Ladungsverstärkerempfindlichkeit besteht
- Fig. 3: ein Messsignal und ein verstärktes Teilsignal mit dem zugehörigen Steuersignal (Fig. 4)
- Fig. 5: eine Anwendung der erfindungsgemässen Schaltung für die Druckmessung beim Spritzgiessen
- Fig. 6: eine Darstellung des beim Spritzgiessen entstehenden Drucksignals mit verstärkten Teilsignalen sowie der zugehörigen Steuersignale

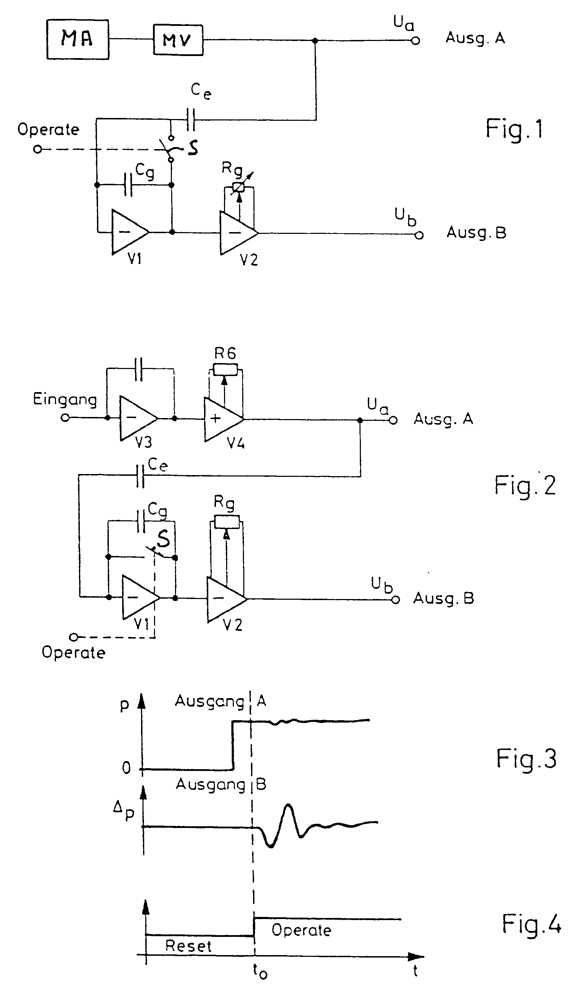

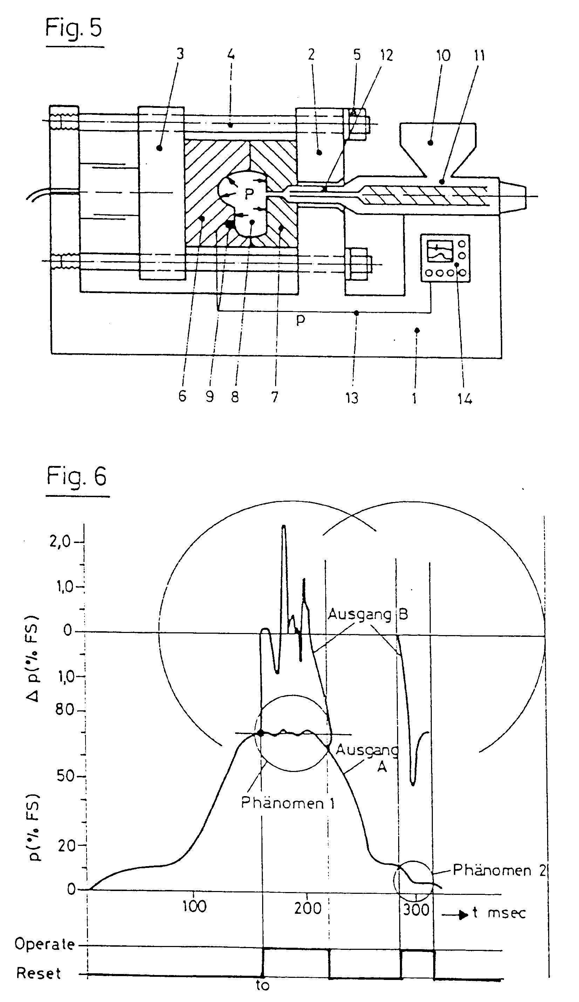

Fig. 1 stellt die erfindungsgemässe Grundschaltung dar. Von einem Messwertaufnehmer, beispielsweise zur Messung einer Kraft, einer Dehnung, eines Druckes, einer Beschleunigung, gehen elektrische Signale aus, die in einem Messverstärker verstärkt werden. Dieser Verstärker ist im allgemeinen einstellbar, so dass ein erwünschter Verstärkungsgrad erreicht und er damit auf eine bestimmte Messempfindlichkeit abgeglichen werden kann. Am Ausgang A tritt eine Spannung Uₐ auf, die einer bestimmten Eingangsgrösse (z.B. einem bestimmten Druck) zugeordnet werden kann. Bei einem technischen Vorgang mit zeitlich variabler Eingangsgrösse (z.B. zeitlich variablem Druck in der Kavität einer Spritzgiessform während des Spritzgiessvorganges) entstehen Signalkurven, wie beispielsweise in Fig. 6 als Grundkurve (Ausgang A) dargestellt. Diese Art der Messsignalverstärkung und -Darstellung ist konventionell. Der Messwertaufnehmer kann beispielsweise ein piezoelektrischer Druckaufnehmer sein, er kann aber auch auf der Basis von Dehnungsmessstreifen oder auf irgend einer andern Basis mit elektrischem Ausgang arbeiten. Der Erfindungsgedanke liegt darin, zusätzlich über einen Koppelkondensator Cₑ einen Ladungsverstärker V₁ mit Gegenkopplungskapazität C_{g} und darauf folgendem Spannungsverstärker nachzuschalten. Wenn der die Gegenkopplungskapazität C_{g} überbrückende Schalter geschlossen ist ("Reset"-Position), so ist am Ausgang B die Spannung U_{b} null. Wenn der genannte Schalter mittels eines "Operate"-Signals geöffnet wird (tₒ), beginnt sich die Kapazität C_{g} aufzuladen, und zwar mit der Ladungsänderung aus dem Koppelkondensator Cₑ, entstehend aus der Spannungsänderung am Ausgang A. Die wachsende Ladung (positiv oder negativ) und die damit wachsende Spannung am Ausgang von V₁ wird durch den Spannungsverstärker V₂ verstärkt und an den Ausgang B als Spannung U_{b} weitergegeben.

Wenn der Schalter durch ein Steuersignal wieder geschlossen wird (Uebergang von der "Operate"- in die "Reset"-Position), so wird die Gegenkopplungskapazität C_{g} wieder kurzgeschlossen und die Spannung am Ausgang B, U_{b} , wieder null. Während der Oeffnungsdauer des Schalters erhalten wir am Ausgang B scmit ein von null ausgehendes verstärktes Messsignal (als Spannung) wie es z.B. in Fig. 6 (Kurven Ausgang B, Phänomen 1 und 2) dargestellt wird. Der Vergrösserungsfaktor für die Kurvendarstellung kann über den Verstärkungsfaktor des Verstärkers V₂ durch geeignete Einstellung des Potentiometers R_{g} bzw. durch das Verhältnis der Kondensatoren Cₑ/C_{g} eingestellt werden.

Fig. 2 stellt eine Modifikation der in Fig. 1 dargestellten Grundschaltung dar, welche im Zusammenhang mit piezoelektrischen Aufnehmern verwendet wird. Die Piezoelemente geben bei mechanischer Belastung elektrische Ladungen ab. Es ist deshalb folgerichtig und auch konventionell, wenn der Messverstärker von Fig. 1 als Ladungsverstärker V₃ mit Gegenkopplungskapazität C_{g}, gefolgt von einem über ein Potentiometer R_{g} regulierbaren Spannungsverstärker V₄ (Abstimmung der Messempfindlichkeit), ausgebildet wird.

Fig. 3 stellt ein Messsignal (Ausgang A) und ein verstärktes Teilsignal (Ausgang B) dar. Beide Signale sind unter Verwendung der in Fig. 2 dargestellten Schaltung entstanden, das erste am Ausgang A und das zweite am Ausgang B, und stellen den Druck p (Ausgang A) und dessen Variation Δp als Funktion der Zeit t während der Nachdruckphase beim Spritzgiessen dar. Der Spritzgiessvorgang selber wird bei der Beschreibung der Figuren 5 und 6 eingehender dargestellt. Fig. 4 stellt die Steuersignale für das Oeffnen des Schalters (Operate-Phase, Messbeginn) des Ladungsverstärkers V₁ (Operate) dar. Vor Messbeginn ist der Schalter geschlossen (Reset-Phase).

Die Figuren 5 und 6 zeigen die Anwendung der erfindungsgemässen Schaltung auf die Druckmessung beim Spritzgiessen.

Fig. 5 stellt eine Spritzgiessmaschine während des Einspritzvorganges dar. 1 bedeutet das Maschinenbett, welches über die feste und bewegliche Anpressplatte 2,3 die zweiteilige Giessform 6,7 mit der Kavität 8 trägt. Die bewegliche Anpressplatte 3 erzeugt durch eine Hydraulik-Vorrichtung eine Presskraft, welche die Formteile 6 und 7 zusammenpresst und dadurch die Kavität 8 abschliesst. Die Holme 4 durchdringen sowohl die feste, als auch die bewegliche Anpressplatte 2 und 3 und werden durch Gewinde in der Endpartie des Maschinenbettes verankert. Gespannt werden sie durch Anziehen der Schraubenmuttern 5.

In den Einfülltrichter 10 wird Kunststoffgranulat eingefüllt, welches im Schneckenvorraum 11, aber auch noch in der Einspritzdüse 12 erhitzt und dadurch flüssig wird. Unter hohem Druck wird der flüssige Kunststoff durch die Düse 12 in die Kavität 8 eingespritzt, füllt diese auf, kühlt ab und erstarrt. Während dieses Spritzgiesszyklus interessiert der Druckverlauf in der Kavität 8, da Abweichungen vom normalen Druckverlauf Anlass zu Eingriffen in den Prozess geben können. Ueber den zeitlichen Druckverlauf (in Fig. 6 dargestellt) kann die Maschine gesteuert werden. Der Druck p wird über den Druckaufnehmer 9, der oft piezoelektrisch ist, gemessen und als elektrisches Signal über die Signalleitung 13 an das Registriergerät 14 weitergegeben.

Welche Signale dieses Gerät anzeigen kann, wird in Fig. 6 dargestellt.Die unterste Kurve, welche dem Ausgang A der beispielsweise in den Druckaufnehmer integrierten erfindungsgemässen Schaltung nach Fig. 1 oder 2 als Spannung Vₐ entnommen wird, stellt den zeitlichen Druckverlauf während eines Spritzgiesszyklus dar (Abszisse: Zeit t in msec, Ordinate: Druck p in % FS, Full Scale). Der ansteigende Ast der Kurve entspricht der Füllphase, der mehr oder weniger horizontale Ast mit geringen Variationen des Druckes der Verdichtungsphase, und der absteigende Ast der Nachdruckphase mit ebenfalls relativ geringen Druckänderungen (sehr grobe Einteilung). Sowohl während der Verdichtungsphase als auch während der Nachdruckphase können jedoch Druckvariationen entdeckt werden (Phänomens 1 und 2), die von Interesse sein könnten, aber zu wenig genau analysiert werden können, weil die dazu notwendige Auflösung und Vergrösserung fehlen. Genau hier wird die Erfindung wirksam. Entnimmt man nämlich durch Oeffnen des Schalters S während den für die Phänomene 1 und 2 interessierenden Zeitabschnitten die Messsignale dem Ausgang B der bereits erwähnten Schaltung, so entstehen die im oberen Teil der Fig. 6 dargestellten, detaillierten, d.h. besser aufgelösten und vergrösserten Signalkurven (Abszisse: Zeit t in msec, Ordinate: Druckvariationen Δp in % FS, Full Scale). Wie bereits früher beschrieben, wird der zum Ausgang B führende Ladungsverstärker V₁ dadurch aktiviert, dass der zu C_{g} parallel liegende Schalter geöffnet wird (Uebergang von der Reset- in die Operate-Position). Das dazu erforderliche Steuersignal ist unten an der Fig. 6 dargestellt.

Werden die Druckvariationen, beispielsweise am Ende der Verdichtungsphase wieder grösser, so wird der Schalter S wieder geschlossen, womit, wie bereits erwähnt, die Gegenkopplungskapazität C_{g} kurzgeschlossen und das Mess-Signal am Ausgang B wieder zu Null wird; als zusätzlicher Vorteil wird dadurch erreicht, dass der zweite Messverstärker V₁ , V₂ vor Uebersteuerungen geschützt wird.

Die erfindungsgemässe Verstärkerschaltung ist überall dort vorteilhaft einsetzbar, wo in einer Messkurve Variationen der Messsignale mit geringen Amplituden genauer analysiert werden müssen. Dies gilt natürlich nicht nur für den oben dargestellten Fall des Spritzgiessens, sondern für zahlreiche dynamische Druck-, Beschleunigungs- oder Dehnungs-Messvorgänge, insbesondere solche zyklischer Natur. Wichtig ist der Umstand, dass sowohl der Gesamtvorgang als auch wichtige Details in Vergrösserung simultan beobachtet und analysiert werden können.

## Patentansprüche

1. Messanordnung zum Erfassen von Kräften, Dehnungen, Drücken und Beschleunigungen, bestehend aus einem entsprechenden Aufnehmer (MA) und damit verbundenen Messverstärkern (MV), wobei dem Aufnehmer (MA) ein erster Messverstärker (MV) und - mit kapazititver Kopplung (Cₑ) - ein zweiter Messverstärker (V₁, V₂ ) mit je einem eigenen Signalsausgang (A, B) nachgeschaltet sind, dadurch gekennzeichnet, dass als zweiter Messverstärker ein Ladungsverstärker (V₁ ) mit Gegenkopplungskapazität (C_{g}) und ein Spannungsverstärker (V₂ ) in Serie vorhanden sind, und dass ferner dem Ladungsverstärker (V₁ ) parallel ein Kurzschluss-Schalter (S) zugeordnet ist, der im Verwendungsfall in Zeiten kleiner Variationen des Signals am ersten Signalausgang (A) geöffnet und in Zeiten grosser Variationen des Signals am ersten Signalausgang geschlossen ist, wodurch - während der Oeffnungszeiten des Schalters (S) - simultan am ersten Signalausgang (A) das gesamte Mess-Signal (p) und am zweiten Signalausgang (B) Aenderungen (Δp) dieses Mess-Signals (p) mit vergrösserter Verstärkung gemessen werden.

2. Messanordnung nach Anspruch 1, dadurch gekennzeichnet, dass der Verstärkungsgrad des Spannungsverstärkers (V₂) oder das Kapazitätsverhältnis Cₑ/C_{g} regulierbar ist und dadurch der Vergrösserungsmassstab für die Teilsignale (Δp) eingestellt werden kann.

3. Messanordnung nach Anspruch 1 oder 2, dadurch gekennzeichnet, dass der dem Aufnehmer (MA) unmittelbar nachgeschaltete Messverstärker (MV) aus einem Ladungsverstärker (V₃) und einem Spannungsverstärker (V₄) besteht.

## Claims

1. Measuring arrangement for detecting forces, strains, pressures and accelerations, consisting of an appropriate transducer (MA) and measuring amplifiers (MV) connected with it, one measuring amplifier (MV) being connected to the transducer (MA) and also a second measuring amplifier (V₁, V₂) with capacitive coupling (Cₑ), each followed by a signal output (A, B), characterized by the provision of a charge amplifier (V₁) with negative feedback capacity (C_{g}) and a voltage amplifier (V₂) connected in series, also a short-circuiting switch (S) paralleling the charge amplifier (V₁₎, which when in use opens the first signal output (A) in times of small signal variations and closes the first signal output in times of large signal variations, so that during the opening intervals of switch (S) on the first signal output (A) the entire measuring signal (p) and simultaneously on the second signal output (B) variations (Δp) of this measuring signal (p) are measured with increased amplification.

2. Measuring arrangement according to Claim 1, characterized by the gain of the voltage amplifier (V₂) or the capacitance ratio Cₑ/C_{g} being controllable, so that the magnification scale for the part signals (Δp) can be adjusted.

3. Measuring arrangement according to Claim 1 or 2, characterized by the measuring amplifier (MV) connected immediately after the transducer (MA) consisting of a charge amplifier (V₃) and a voltage amplifier (V₄).

## Revendications

1. Dispositif de mesure pour le rélevé de forces, d'allongements, de pressions et d'accélérations constitué d'un capteur correspondant (MA) et d'amplificateurs de mesure (MV) qui y sont reliés, le capteur (MA) étant suivi d'un premier amplificateur de mesure (MV) et, avec capacité contre-réactive Cₑ, d'un deuxième amplificateur de mesure (V₁, V₂), ayant chacun une propre sortie du signal de mesure (A, B), caractérisé par le fait que comme deuxième amplificateur de charge il comporte un amplificateur de tension (V₁) à capacité contre-réactive (C_{g}) et un amplificateur de tension (V₂) montés en série et qu'un interrupteur de court-circuit (S) est aménagé en parallèle à l'amplificateur de charge (V₁) qui, durant les périodes de faibles variations du signal à la première sortie (A), est ouvert et durant les périodes de fortes variations est fermé, permettant ainsi durant les phases d'ouverture de l'interrupteur (S) de mesurer simultanément à la première sortie du signal (A) le signal de mesure total et à la deuxième sortie du signal (B) les variations (Δp) de ce signal de mesure (P) avec un gain plus important.

2. Dispositif de mesure selon revendication 1, caractérisé par le fait que le facteur de gain de l'amplificateur de tension (V₂) ou le rapport des capacités Cₑ/C_{g} est réglable et qu'ainsi le facteur d'agrandissement du signal partiel (Δp) puisse être ajusté.

3. Dispositif de mesure selon revendication 1 ou 2 caractérisé par le fait que l'amplificateur de mesure (MV) suivant directement le capteur (MA) est constitué d'un amplificateur de charge (V₃) et d'un amplificateur de tension (V₄).
